# EUROPÄISCHE PATENTSCHRIFT

(11) **EP 1 195 193 B1**
(45) Veröffentlichungstag und Bekanntmachung des Hinweises auf die Patenterteilung: **19.11.2003**
(21) Anmeldenummer: 01122055.5
(22) Anmeldetag: 14.09.2001
(51) Int. Cl.: B01J 19/24, F28D 9/00, C01B 3/32, C01B 3/38

(54) **Reaktorstruktur in Wärmeübertrager-Schichtstapelbauweise**
Plate type reactor for heat exchange
Réacteur à plaques pour échange de chaleur

(30) Priorität: 05.10.2000 DE 10049194
(43) Veröffentlichungstag der Anmeldung: 10.04.2002
(73) Patentinhaber: Ballard Power Systems AG, 73230 Kirchheim / Teck-Nabern (DE)
(72) Erfinder: Benz, Uwe, 88690 Uhldingen-Mühlhofen (DE); Michels, Horst, 73230 Kirchheim (DE); Tischler, Alois, 84405 Dorfen (DE); Weisser, Marc, 73277 Owen/Teck (DE)
(74) Vertreter: Beyer, Andreas, Dr.

(56) Entgegenhaltungen:
- EP-A- 0 976 446
- EP-A- 1 116 518
- DE-A- 4 420 752
- DE-A- 10 001 064
- US-A- 3 528 783

## Beschreibung

Die Erfindung bezieht sich auf eine Reaktorstruktur in Wärmeübertrager-Schichtstapelbauweise nach dem Oberbegriff des Anspruchs 1. Ein solcher Reaktor eignet sich beispielsweise als Reformierungsreaktor zur Wasserstofferzeugung in einem Brennstoffzellenfahrzeug oder in stationären Brennstoffzellenanwendungen durch Reformierung von Methanol oder eines anderen Einsatzstoffs.

Eine derartige Reaktorstruktur ist in der Offenlegungsschrift DE 44 20 752 A1 offenbart. Dort ist in die volumengrößeren Reaktorschichten nur das sie füllende Katalysatormaterial eingebracht, während in die volumenkleineren Temperierschichten, die dort speziell Heizschichten sind, wärmeleitende Wellrippen eingebracht sind. In einem andersartigen, dort gezeigten Beispiel sind die Reaktorschichten nicht mit einem Katalysatormaterial befüllt, sondern die zugewandten Seiten der Plattenelemente sind mit einer entsprechenden Katalysatorbeschichtung versehen, und stützende bzw. strömungsleitende Wellrippen sind sowohl in die Reaktorschichten als auch in die Heizschichten eingebracht.

In EP 1116518 ist ein Reformierungsreactor in Schichtbauweise offenbart. Dadurch werden in Stapelrichtung alternierend Reaktorschichten, die mit Reaktionskatalysatormaterial befüllt sind und Temperierschichten gebildet. Die effektive Höhe und damit das Volumen der Reaktorschichten, ist um ein Mehrfaches größer als die effektive Höhe und damit das Volumen der Temperierschichten.

Der Erfindung liegt als technisches Problem die Bereitstellung einer Reaktorstruktur der eingangs genannten Art zugrunde, die sich mit relativ geringem Aufwand in kompakter und druckstabiler Form fertigen lässt und dabei möglichst großvolumige Reaktorschichten bereitstellt, die über die zwischenliegenden Temperierschichten temperiert, d.h. auf einer gewünschten Temperatur gehalten werden können und die sich insbesondere zur Wasserstofferzeugung für die Speisung eines Brennstoffzellensystems z.B. in einem Brennstoffzellenfahrzeug eignet.

Die Erfindung löst dieses Problem durch die Bereitstellung einer Reaktorstruktur mit den Merkmalen des Anspruchs 1.

Für die Reaktorstruktur nach Anspruch 1 werden spezielle Plattenelemente verwendet, die an wenigstens zwei nicht benachbarten Seitenbereichen, längs derer sie mit einem jeweils benachbarten Plattenelement fluiddicht zur Bildung eines geschlossenen Seitenbereichs verbunden sind, derart U-förmig umgebogen verlaufen und mit ihren U-Seitenflanken aneinanderliegend im Stapel angeordnet sind, dass die Reaktorschichten eine größere Höhe als die Temperierschichten aufweisen. Durch die Verwendung der seitlich geeignet umgebogenen Plattenelemente werden zum Aufbau des Schichtstapels keine separaten seitlichen Abstandselemente benötigt. Gleichzeitig ist die seitliche U-Form so gewählt, dass benachbarte Plattenelemente längs ihrer einander zugewandten U-Seitenflanken und damit flächig und nicht nur linienförmig zuverlässig fluiddicht miteinander verbunden werden können. Zudem können gegenüber den Temperierschichten deutlich höhere und damit großvolumigere Reaktorschichten gebildet werden, was bei gegebener, gewünschter Reaktorumsatzleistung eine kompakte Bauform der Reaktorstruktur begünstigt.

Vorzugsweise sind in die Reaktorschichten wärmeleitfähige Wellrippen eingebracht, die zum einen die Wärmeübertragung zwischen den Reaktorschichten und den Temperierschichten und die Wärmeverteilung innerhalb der Reaktorschichten fördern und zum anderen als Abstützstruktur für die großvolumigeren Reaktorschichten dienen können, was die Stabilität und Druckfestigkeit des Schichtstapelaufbaus verbessern kann.

In einer Weiterbildung der Erfindung nach Anspruch 3 werden im wesentlichen ebene Plattenelemente verwendet, welche an den betreffenden Seitenbereichen U-förmig geeignet umgebogen verlaufen, so dass dadurch beim Aneinanderfügen der Plattenelemente alternierend niedrigere Temperierschichten und höhere Reaktorschichten gebildet werden.

In einer Weiterbildung der Erfindung nach Anspruch 4 werden für die Reaktorstruktur Plattenelemente mit Wellstruktur verwendet. Dies ergibt im Vergleich zu ebenen Plattenelementen bei gleicher Grundfläche eine größere, wärmeübertragungsaktive Kontaktfläche zwischen Reaktorschicht und Heizschicht.

Bei einer nach Anspruch 5 weitergebildeten Reaktorstruktur sind auch in den Temperierschichten Wellrippen vorgesehen, was weiter zur Stabilität des Schichtstapelaufbaus beiträgt und die Wärmeübertragungseigenschaften verbessern kann.

Vorteilhafte Ausführungsformen der Erfindung sind in den Zeichnungen dargestellt und werden nachfolgend beschrieben. Hierbei zeigen:
- Fig. 1: eine schematische, ausschnittweise Längsschnittansicht einer Reaktorstruktur in Wärmeübertrager-Schichtstapelbauweise aus Plattenelementen mit Wellstruktur und
- Fig. 2: eine Ansicht entsprechend Fig. 1 für eine Reaktorstruktur aus ebenen Plattenelementen.

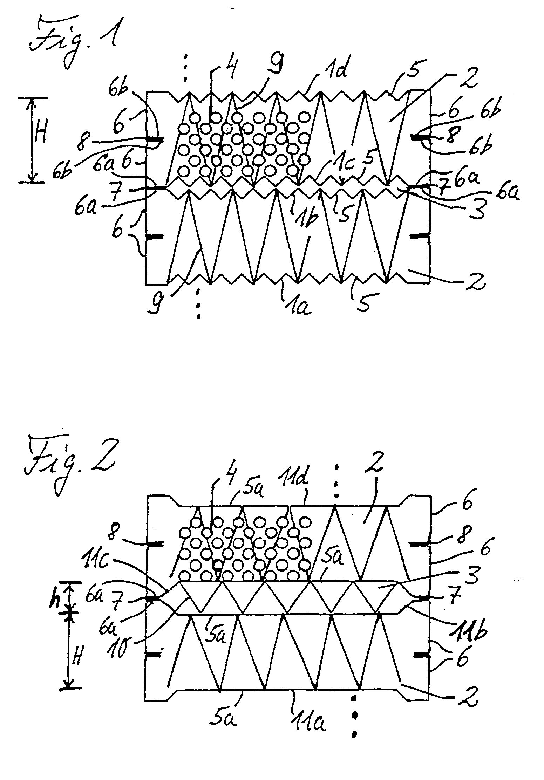

Fig. 1 zeigt ausschnittweise eine Reaktorstruktur in Wärmeübertrager-Schichtstapelbauweise mit einem Stapel einer vorgebbaren Anzahl von wärmeleitfähigen Blechplattenelementen 1a, 1b, 1c, 1d, die in Stapelrichtung alternierend je eine Reaktorschicht 2 und eine Temperierschicht 3 begrenzen. Jede Reaktorschicht ist zur Katalysierung einer gewünschten, durchzuführenden chemischen Reaktion mit einem entsprechenden Reaktionskatalysatormaterial 4 befüllt, z.B. in Form einer Katalysatorschüttung, wie sie in Fig. 1 der Übersichtlichkeit halber nur bereichsweise angedeutet ist.

Jede Blechplatte 1a bis 1d weist eine Wellstruktur 5 auf, die z.B. durch Umformen aus einem ebenen Blechplattenrohling hergestellt werden kann. Durch die Wellstruktur 5 ergibt sich eine bei gegebener Plattengrundfläche im Vergleich zu ebenen Platten höhere Oberfläche und damit Grenzfläche zwischen einer jeweiligen Reaktorschicht 2 und einer benachbarten Temperierschicht 3, was die Wärmeübertragung zwischen diesen Schichten 2, 3 verbessert.

An zwei gegenüberliegenden Seitenbereichen sind die Blechplatten 1a bis 1d zu einer Seite hin in einer U-Form 6 umgebogen. Die Blechplatten 1a bis 1d sind dann abwechselnd jeweils gekippt im Stapel gegeneinandergelegt.

Dadurch bilden sich zum einen die Temperierschichten 3 als vergleichsweise niedrige, durch gegeneinanderliegende Wellstrukturen 5 zweier benachbarter Blechplatten definierte Schichträume, die seitlich durch fluiddichte Verbindungen 7 geschlossen sind. Diese Verbindungen 7 können z.B. durch Löten, Schweißen oder Kleben realisiert sein und sorgen als flächige Fixierungen gegeneinanderliegender, innerer Flanken 6a der randseitigen U-Form 6 für eine zuverlässige, seitliche Abdichtung der von einem geeigneten Temperiermedium durchströmbaren Temperierschichten 3. Die beiden jeweils gegeneinanderliegenden Wellstrukturen 5 können je nach Bedarf mit parallelen oder gegeneinander geneigten Längserstreckungsachsen der Wellenberge und Wellentäler quer zur Stapelrichtung angeordnet sein, wobei in letzterem Fall eine Kreuzkanalstruktur für die Temperierschichten 3 realisiert sein kann.

Die Reaktorschichten 2 sind dadurch gebildet, dass je zwei zugehörige, sie begrenzende Blechplatten randseitig mit ihrer U-Form und genauer mit den äußeren U-Seitenflanken 6b derselben gegeneinandergelegt sind, so dass die Reaktorschichten 2 eine Höhe H in Stapelrichtung aufweisen, die etwa dem doppelten Wert der Weite der U-Form, d.h. des Abstands ihrer beiden Seitenflanken 6a, 6b entspricht. Durch fluiddichte, flächige Verbindungen 8 längs der aneinanderliegenden äußeren U-Seitenflanken 6d, z.B. mittels Löten, Schweißen oder Kleben, wird für eine zuverlässige seitliche Abdichtung der Reaktorschichten 2 gesorgt.

In die Reaktorschichten 2 sind Wellrippen 9 eingebracht, die sich jeweils vorzugsweise durchgehend über das gesamte Reaktorschichtvolumen hinweg erstrecken und sich gegen die reaktorschichtbegrenzenden Wellstrukturen zugehöriger, benachbarter Blechplatten 1a, 1b bzw. 1c, 1d abstützen. Die Wellrippen 9 bestehen aus einem wärmeleitfähigen Material, z.B. aus demselben Material wie die Blechplatten 1a bis 1d, und erfüllen somit zum einen eine den Stapel stabilisierende Abstützfunktion und zum anderen eine Wärmeübertragungsfunktion, welche den Eintrag von Wärme aus den Temperierschichten 3 in die Reaktorschichten 2 oder das Abführen von Wärme aus den Reaktorschichten 2 in die Temperierschichten 3 und die Erzielung einer gleichmäßigen Wärmeverteilung in den Reaktorschichten 2 unterstützt.

Je nach Anwendungsfall wird in den Reaktorschichten 2 eine exotherme oder endotherme chemische Reaktion durchgeführt, z.B. eine exotherme partielle Oxidation von Methanol oder eine endotherme Wasserdampfreformierung von Methanol zwecks Erzeugung eines wasserstoffreichen, z.B. für Brennstoffzellen in einem stationären oder mobilen Brennstoffzellensystem verwendbaren Gases. Im Falle einer exothermen Reaktion fungieren die Temperierschichten 3 als Kühlschichten, im Fall einer endothermen Reaktion hingegen als Heizschichten. Dazu werden sie in herkömmlicher Weise geeignet von einem Kühl- bzw. Heizmedium durchströmt.

In Fig. 2 ist wiederum ausschnittweise eine zu Fig. 1 ähnliche Reaktorstruktur gezeigt, wobei zum leichteren Verständnis funktionell gleiche Komponenten mit denselben Bezugszeichen versehen sind und insoweit auf die obigen Ausführungen zu Fig. 1 verwiesen werden kann. Ein Unterschied der Reaktorstruktur von Fig. 2 besteht darin, dass ebene Blechplatten 11a bis 11d und nicht solche mit Wellstruktur zum Aufbau des Schichtstapels verwendet sind.

An zwei gegenüberliegenden Seitenbereichen sind die Blechplatten 11a bis 11d wiederum zu der U-Form 6 umgebogen, und zwar derart, dass deren innere, d.h. der übrigen Plattenfläche näherliegende Seitenflanke 6a um eine vorgebbare Höhe h/2 in der einen Richtung gegenüber der übrigen, ebenen Plattenfläche 5a versetzt ist, während ihre andere, äußere Seitenflanke 6b in der anderen Richtung um eine vorgegebene größere Höhe H/2 gegenüber der ebenen Plattenhauptfläche 5a versetzt ist. Dies führt dazu, dass durch abwechselnd umgekipptes Anordnen der identisch gestalteten Blechplatten 11a bis 11d im Stapel zum einen die Temperierschichten 3 mit einer Höhe h, die dem doppelten Wert des Versatzes der inneren U-Seitenflanken 6a gegenüber der jeweils zugehörigen Plattenhauptfläche 5a entspricht, und zum anderen die Reaktorschichten 2 mit einer demgegenüber größeren Höhe H gebildet werden, die dem doppelten Wert des Versatzes der äußeren U-Seitenflanken 6b gegenüber der jeweils zugehörigen Plattenhauptfläche 5a entspricht.

Bei der Reaktorstruktur von Fig. 2 sind auch in die Temperierschichten 3 Wellrippen 10 eingebracht, die ebenso wie die Wellrippen 9 in den Reaktorschichten 2 als Abstützelemente fungieren, welche die jeweils angrenzenden Plattenhauptflächen 5a auf Abstand halten, und zudem eine Wärme- und Strömungsleitfunktion erfüllen können. Im übrigen gelten für die Reaktorstruktur von Fig. 2 die oben zur Reaktorstruktur von Fig. 1 angegebenen Eigenschaften und Vorteile entsprechend.

Wie aus der obigen Beschreibung vorteilhafter Ausführungsbeispiele deutlich wird, ist die erfindungsgemäße Reaktorstruktur mit vergleichsweise geringem Aufwand aus aufeinandergelegten Plattenelementen ohne Notwendigkeit separater randseitiger Abstandselemente in einer kompakten Wärmeübertrager-Schichtstapelbauweise mit relativ großvolumigen Reaktorschichten und kleinvolumigeren Temperierschichten herstellbar. Die einzelnen Schichten sind durch gegeneinander anliegende Wellstrukturen der Plattenelemente selbst und/oder durch in die Schichten eingebrachte Wellrippen ausreichend druckstabil und seitlich durch flächige fluiddichte Verbindungen benachbarter Plattenelemente zuverlässig abgedichtet. Die erfindungsgemäße Reaktorstruktur ist sowohl in ein- oder mehrstufigen Reformierungsreaktoren zur Wasserdampfreformierung von Methanol zwecks Gewinnung eines wasserstoffreichen Gasgemischs für die Speisung von Brennstoffzellen eines Brennstoffzellenfahrzeugs als auch in anderen chemischen Reaktoren einsetzbar, in denen Reaktorschichten mit Temperierschichten in Wärmekontakt stehen sollen.

## Patentansprüche

1. Reaktorstruktur in Wärmeübertrager-Schichtstapelbauweise mit
- einem Stapel wärmeleitfähiger Plattenelemente (1a bis 1d; 11a bis 11d), die in Stapelrichtung alternierend je eine Reaktorschicht (2), die mit einem Reaktionskatalysatormaterial (4) zur Katalysierung einer chemischen Reaktion befüllt ist, und eine von einem Temperiermedium durchströmbare Temperierschicht (3) begrenzen, wobei benachbarte Plattenelemente an wenigstens zwei geschlossenen Seitenbereichen fluiddicht miteinander verbunden sind,
**dadurch gekennzeichnet, dass**
- die Plattenelemente (1a bis 1d; 11a bis 11d) an den zwei geschlossenen Seitenbereichen derart U-förmig umgebogen verlaufen und mit ihren Seitenflanken (6a, 6b) aneinanderliegend im Stapel angeordnet sind, dass die Reaktorschichten (2) mit einer größeren Höhe (H) gebildet sind als die Temperierschichten (3).

2. Reaktorstruktur nach Anspruch 1,
**dadurch gekennzeichnet, dass** wenigstens in die mit einer größeren Höhe (H) als die Temperierschichten (3) gebildeten Reaktorschichten (2) wärmeleitende Wellrippen (9) eingebracht sind.

3. Reaktorstruktur nach Anspruch 1,
**dadurch gekennzeichnet, dass** die Plattenelemente (11a bis 11d) ebene Hauptflächen (5a) aufweisen und an den zwei geschlossenen Seitenbereichen U-förmig derart umgebogen verlaufen, dass innere U-Seitenflanken (6a) um eine vorgebbare kleinere Höhe (h/2) in der einen Richtung und äußere U-Seitenflanken (6b) um eine größere Höhe (H/2) in der anderen Richtung gegenüber der ebenen Plattenhauptfläche versetzt sind.

4. Reaktorstruktur nach Anspruch 1 oder 2,
**dadurch gekennzeichnet, dass** die Plattenelemente (1a bis 1d) eine gewellte Plattenhauptfläche (5) aufweisen.

5. Reaktorstruktur nach einem der Ansprüche 2 bis 4,
**dadurch gekennzeichnet, dass** auch in die Temperierschichten (3) Wellrippen (10) eingebracht sind.

## Claims

1. A reactor structure of a stacked layer construction for heat transfer, having
- a stack of heat-conductive plate elements (1a to 1d; 11a to 11d) which in the direction of the stack alternately delimit respectively a reactor layer (2), filled with a reaction catalyst material (4) for catalysing a chemical reaction, and a temperature control layer (3) through which a temperature control medium can flow, in which neighbouring plate elements are connected to one another in fluid-tight manner at at least two closed side regions,
**characterised in that**
- the plate elements (1a to 1d; 11a to 11d) extend bent around into a U shape at the two closed side regions and are arranged in the stack with their side flanks (6a, 6b) lying against one another such that the reactor layers (2) are formed to have a greater height (H) than the temperature control layers (3).

2. A reactor structure according to Claim 1, **characterised in that** heat-conductive corrugated ribs (9) are made at least in the reactor layers (2) formed to have a greater height (H) than the temperature control layers (3).

3. A reactor structure according to Claim 1, **characterised in that** the plate elements (11a to 11d) have planar principal surfaces (5a) and extend bent around into a U shape at the two closed side regions such that internal U-shaped side flanks (6a) are offset in the one direction by a predeterminable smaller height (h/2) and external U-shaped side flanks (6b) are offset in the other direction by a greater height (H/2) in relation to the planar plate principal surface.

4. A reactor structure according to Claim 1 or 2, **characterised in that** the plate elements (1a to 1d) have a corrugated plate principal surface (5).

5. A reactor structure according to one of Claims 2 to 4, **characterised in that** corrugated ribs (10) are made in the temperature control layers (3) as well.

## Revendications

1. Structure de réacteur dans une construction à empilement stratifié d'échangeur de chaleur, avec
- un empilement d'éléments à plaques conducteurs de chaleur (1a à 1d; 11a à 11d) qui bordent dans le sens de l'empilement, chacun en alternance, une couche du réacteur (2) remplie d'un matériau catalytique (4) pour la catalysation d'une réaction chimique, et une couche tempérée (3) pouvant être traversée par un milieu tempéré, des éléments à plaques voisins étant liés entre eux de façon étanche aux fluides contre au moins deux régions latérales fermées,
**caractérisée en ce que**
- les éléments à plaques (1a à 1d; 11a à 11d) sont recourbés en forme de U contre les deux régions latérales fermées et sont, avec leurs flancs latéraux (6a, 6b), disposés contigus dans l'empilement, de telle sorte que les couches du réacteur (2) présentent une hauteur (H) plus importante que les couches tempérées (3).

2. Structure de réacteur selon la revendication 1,
**caractérisée en ce que** des renforts ondulés (9) conducteurs de chaleur sont introduits au moins dans les couches du réacteur (2) présentant une hauteur (H) plus importante que les couches tempérées (3).

3. Structure de réacteur selon la revendication 1,
**caractérisée en ce que** les éléments à plaques (11a à 11d) présentent des surfaces principales (5a) planes et sont recourbés en forme de U contre les deux régions latérales fermées, de telle sorte que des flancs latéraux en U intérieurs (6a) sont, dans un sens, décalés d'une plus faible hauteur (h/2) prédéfinissable et des flancs latéraux en U extérieurs (6b) sont, dans l'autre sens, décalés d'une hauteur (H/2) plus importante par rapport à la surface principale plane des plaques.

4. Structure de réacteur selon la revendication 1 ou 2,
**caractérisée en ce que** les éléments à plaques (1a à 1d) présentent une surface de plaque principale ondulée (5).

5. Structure de réacteur selon l'une des revendications 2 à 4,
**caractérisée en ce que** des renforts ondulés (10) sont également introduits dans les couches tempérées (3).
